(19) Europäisches Patentamt
European Patent Office
Office européen des brevets

(11) **EP 2 713 045 A1**

(12) # EUROPEAN PATENT APPLICATION

(43) Date of publication:
**02.04.2014 Bulletin 2014/14**

(51) Int Cl.:
***F03D 1/06*** [(2006.01)]

(21) Application number: **12425157.0**

(22) Date of filing: **26.09.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventors:<br>• **The inventor has agreed to waive his entitlement to designation.** |
| (71) Applicant: **E.R. Energie Rinnovabili S.R.L.**<br>**00187 Roma (IT)** | (74) Representative: **Perronace, Andrea et al**<br>**Barzano & Zanardo Roma S.p.A.**<br>**Via Piemonte 26**<br>**00187 Roma (IT)** |

(54) **Rotating blade body for turbines using the magnus effect with rotation axis of the turbine parallel to the direction of the fluid**

(57) The present invention relates to a rotating blade body (10) for turbines using the Magnus effect (20) with an axis of rotation of the turbine parallel to the direction of the motor fluid, **characterised in that** it is defined by a first sector (11), more distant from said axis of rotation of the turbine, and by a second sector (12), connecting said first sector (11) and said axis of rotation of the turbine, said first sector (11) being circumscribed within a first ovoid of construction of Rankine-Fuhrman, with minor axis ($D_1$) comprised between 1/5 and 1/6 of the diameter ($\varnothing$) of the turbine axis and with major axis ($L_1$) equal to 10 times said minor axis ($D_1$), said first sector (11) having a larger diameter at its point farthest from said axis of rotation of the turbine and equal to $D_1$ and length at least equal to said larger diameter; said second sector (12), of connection between said first sector (11) and said axis of rotation of the turbine, being circumscribed within a second ovoid of construction of Rankine-Fuhrmann, with a major axis ($L_2$) corresponding to the diameter ($\varnothing$) of the turbine and with minor axis ($D_2$) equal to 1/10 of said major axis ($L_2$), said second sector (12) having a larger diameter at its point farthest from said axis of rotation of the turbine and a length equal to the distance between said first sector ($D_1$) and said axis of rotation of the turbine.

EP 2 713 045 A1

**Description**

The present invention relates to a rotating blade body for turbines using the Magnus effect with axis of rotation of the turbine parallel to the direction of the motor fluid.

More specifically, the invention concerns the definition of the construction technique of the blade bodies animated with rotary motion with respect to their longitudinal axis, installed in hydraulic and wind axial turbines operating according to the dynamic effect known as the Magnus effect.

In the text, with the expression axial turbine it is indicated a turbine with an axis of rotation parallel to the direction of the motor fluid.

As is well known, there is a correlation between the spin of a rotating cylinder with respect to its longitudinal axis and the fluid stream which strikes said cylinder in a direction perpendicular to said longitudinal axis. Such a correlation has been described, in 1852 for the first time, by HG Magnus, and for this reason it is called the Magnus effect.

This correlation is highlighted on the lateral skirt of the cylinder with a force, called "lift", in a direction perpendicular to the lines of flow of the fluid stream, and rotated in a clockwise or counterclockwise direction with respect to said stream, depending on the direction of rotation of the cylinder; more in particular it is rotated in a clockwise direction when said cylinder rotates counterclockwise and it is rotated in a counterclockwise direction when said cylinder rotates clockwise.

Quantitatively, the modulus of the lift L (expressed in N/m), per unit length of the cylinder, is given by the equation of Kutta-Joukowski, and is equal to the product of the density of the fluid $\rho$ (expressed in kg/m$^3$), for the asymptotic speed $V_0$ of the fluid threads (expressed in m/s), ie the speed of the fluid threads where the same move undisturbed, and for the circuitry $\Gamma$ (expressed in m$^2$/s).

In formulas, if the cylinder has radius R (expressed in m), the lift due to the Magnus effect is determined by the relation:

$$L = \rho \cdot V_0 \cdot \Gamma = \rho \cdot V_0 \cdot 2\pi \cdot \omega \cdot R^2 = 2\pi \cdot \rho \cdot V_0 \cdot (\omega \cdot R^2)$$

This relation is independent from the shape of the profile, ie it is valid for any profile, by profile being meant the contour of the rotating body along a section plane passing through the rotation axis of the rotating body.

The U.S. patent No. 1,674,169 assigned to the Instituut vor Aero-Hydro-en Dinamiek, inventor Anton Flettner, describes several possible applications of Magnus effect, in particular as "sails" for a boat and as "blades" of a wind generator and presents various alternative embodiments of the rotating bodies, including in particular the cilindric shape (in the patent several boats are shown equipped with a "sail" constituted by a cylindrical rotating body, but it is also shown a wind generator with a rotation axis parallel to the wind direction in which each blade body is formed by four cylinders of circular cross-section and an increasing diameter, starting from the hub towards the end), the ellipsoidal shape (referred to only in a figure relating to a boat without describing its peculiarities) and a shape consisting of two frustoconical portions mutually connected by a cylindrical portion (also in this case without any description that specifies dimensional relationships between these portions). Referring to the wind generator, in it the ratio between the diameter of the turbine wheel and the diameter of the blade body, also called aspect ratio L/D, is equal to 23.

On the basis of this first patent and other subsequent patents, Flettner installed on a boat with tonnage of 1000 tons, two Magnus effect rotating cylinders, 2.75m in diameter and 15m high, driven by two electric motors of about 40kW, with a spin of 750rounds/min, and made its maiden voyage leaving from Hamburg (March 31, 1926) and arriving in New York (May 09, 1926) (A. Flettner, "Mein Weg zum Rotor" 1926).

In 1927, Flettner designed an axial turbine with four Magnus effect cylinders, to feed the powerhouse of the radio station of Berlin.

In U.S. Patent No. 4,366,38 6, TF Hanson presented an axial wind turbine, with three cylindrical blade blade bodies functioning according to the Magnus effect. In this case, the aspect ratio L/D is equal to 15.

J. Cousteau, in 1985, equips its ocean-going vessel in the same manner as the Flettner rotoship, with a variation due to his own patent.

The European patent N. 886 728 describes a turbine blade where the bodies, referred to as "chiral", rotate around their longitudinal axes positioned radially around the central power axial hub, presenting a generic form called: "bulbous shape". The profiles of these "bulbar blade bodies" are not defined, ie, the description of these "bulbar blade bodies" lacks of geometric references of realization supporting the advantages in terms of fluid dynamics related to the choice of the profile, aimed at improving the engineering of the bulbar blade.

Moreover, in European patent N.886728 it is stated that the optimal geometrical configuration of the blade bodies is derived from data provided by a computer through a numerical simulation of an experimental model, taking into account the aerodynamic and mechanical needs, which means to start, from time to time, a specific analysis of CFD (Computational Fluid Dynamics), which provides very complex calculation tools, as in the case of a real fluid the viscosity intervenes in calculation, which modifies the coefficients of lift and drag.

The same generics on the geometry of the profile characterise the PCT application No. WO2002/042640. In fact, in this case also the blade forming object of the invention is described as an axial-symmetrical body designed according to a generic "cylindrical-conical" form, but no details are given about the constructive features and the improvements in the fluid-dynamic field, due to the proposed new blade geometry.

In 2009, the German Enercon, one of the largest manufacturers of wind turbines, launched a cargo ship, 130m long, 22.5m wide and with 10500 metric tons deadweight (DWT), equipped with four Magnus effect cylinders 25m high and 4m in diameter, to integrate, with a saving of 40%, the traditional propulsion propellers.

In the years between 1930 and 1950, Marco Todeschini studied and experimented the Magnus effect and finally edited "La Teoria delle Apparenze (Spazio-Dinamica & PsicoBiofisica)", published by Istituto Italiano d'Arti Grafiche in Bergamo in 1949, as well as "Psico-Biofisica", Ed. Centro Int. di Psicobiofisica, Bergamo, 1949, setting out an innovative interpretation of Magnus effect based on dynamic considerations and corroborated by experiments made in a ship model basin; determining that the effects of attraction and repulsion which are observed on two cylinders parallel to each other, and due to their rotation about their respective longitudinal axes, are connected to the inertia of the earth: that is, the spin of the Earth.

With the aim to give a more general justification of this theoretical-experimental thesis, one may think that the Flettner rotoship is driven by inertial forces activated by the Magnus dynamic process, and, in turn, considered and mathematically explained in the theorem of circuitry of Kutta-Joukowsky, revisited according to a relativistic interpretation.

This may reasonably mean that the one-dimensional theory based on a reference system only coaxial with the longitudinal direction of the flow is not sufficient, since it does not consider the rotational movement of the Earth, ie the "Campo Centro-Mosso" (CCM), according to the designation used by Todeschini.

So, to grasp the meaning of Magnus effect, and comprehend its implications, it is necessary to move the observation point in a triad of references located outside the terrestrial triad reference system in order to attribute to the coaxial reference system, as it actually is, two movements of the Earth: its revolution around the Sun and its rotation (spin) around its axis.

In short, to the one-dimensional flow theory, which is limited to consider as active only the longitudinal component of the flow, it is necessary to replace a new dynamic situation, where the Earth intervenes with its contribution projected in the flow direction.

As mentioned above, this contribution can be evaluated only if the observation point is placed on a triad of reference outside of the "Campo Centro-Mosso".

Then, it is possible to say that, between the Magnus effect machine and the "Campo Centro-Mosso", ie the Earth, there is a correspondence without exception between the energy produced (action), and an equal energy (reaction) taken from the "Campo Centro-Mosso".

Accordingly, following the theoretical-experimental analysis of Todeschini, only a working machine according to the Magnus effect in water, by hypothesis considered in this case incompressible, and in hypercritical dynamic regimes, with the Reynolds number of the order of $10^7$, can transform into useful force the potential of the "Campo Centro-Mosso", ie that of the Earth.

However, in machines proposed up to now to exploit the Magnus effect this important contribution has never been taken into consideration, with the result that the capacity of these machines to take advantage of the Magnus effect is not optimal, ie, from a different point of view, the study and design of these machines, with particular reference to the shape of the rotating bodies, has never been optimized in view of the contribution of the Earth's rotation.

In light of the above, it appears evident the need for Magnus effect machines designed taking into account all the components that affect said effect.

In this context it is included the solution according to the present invention, aiming to provide rotating bodies, also defined blade bodies considering their application as turbine blades with an axis of rotation of the turbine parallel to the direction of fluid flow, ie with axis of rotation of the blade bodies perpendicular to the direction of the fluid flow, having peculiar profiles, different from those considered in accordance with the prior art. These blade bodies are proposed for the construction of wind or hydraulic turbines, operating both in flowing waters and in closed circuits.

In addition to the above justification, by subsequent theoretical and experimental analyses, it is also possible to find more explanations for the generation of energy by the Magnus effect, comparing the theory of inertia with the principles of quantum physics.

Particular importance in this regard have the engineering applications (such as the magnetic levitation train) where it is possible to take advantage of the inhomogeneous magnetic fields and of the gradients of magnetic susceptibility, but also the new interpretation of the "quantum vacuum", considered a supplier of energy and pulses, and, therefore, the connecting element between all bodies in the universe; without forgetting the physics of water.

In particular, according to the present invention, reference is made to the theory of vortex motion in water produced by cylindrical bodies animated by their own spin; this movement being able to generate strong magnetic fields in water, for which the separation surface between the blade body and the environment a strong pressure gradient is created, resulting in the production of power.

In the range of current technological choices of cylindrical and axial-symmetric blade shapes, the present invention proposes therefore tp provide significant improvements, both in the field of industrial engineering and as regards the reduction of passive forces, relating to the movement of blade bodies, thus promoting the increase of power output.

These and other results are obtained according to the present invention suggesting a rotating blade body for turbines using the Magnus effect with axis of rotation of the turbine parallel to the direction of the motor fluid the profile of which is obtained by making reference to information deemed sure and reliable, and to the experimental results that give the lift of the cylinder as a function of the relationship between the "spin" of the cylinder and the speed of the undisturbed wind, in order to fit, after processing of fluid dynamic parameters, in a configuration built on the profile of ovoidal bodies with precise ratios of length and width, widely experienced in the aviation industry, as regards the coefficients of lift and drag, and in particular on the profile of the ovoid of Rankine-Fuhrmann, applied in the realization of the airships.

In this way it is possible to ensure the reduction of all those terms that subtract power to the axis, such as for example:

- the term due to the friction of the flow on the outer surface of the blade body;
- the term which expresses the losses of the electric motor that generates the rotation of the blade bodies;
- the term which expresses the friction losses in the transmission and support members: gearwheels and bearings.

It is also possible to ensure:

- a standard to be applied in industrial production lines;
- a greater surface between two adjacent blade bodies for the fluid going through the wheel of the turbine in motion;
- a reduction in the energy dissipated and lost in the power lines due to wake vortex separation.

The purpose of the present invention is therefore to provide a rotating blade body for turbines using the Magnus effect with axis of rotation of the turbine parallel to the direction of the motor fluid which allows to overcome the limits of the solutions of the prior art and to obtain the technical results described above.

Further object of the invention is that said blade body can be manufactured with costs substantially limited, both as regards production costs and as regards the costs of management.

Another object of the invention is to provide a rotating blade body for turbines using the Magnus effect with axis of rotation of the turbine parallel to the direction of the motor fluid that is substantially simple, safe and reliable.

It is therefore a specific object of the present invention a rotating blade body for turbines using the Magnus effect with axis of rotation of the turbine parallel to the direction of the motor fluid as defined in claim 1 and a turbine using the Magnus effect as defined in claim 8.

Further characteristics of the blade body and turbine according to the present invention are defined in the corresponding dependent claims.

The present invention will be now described, for illustrative but not limitative purposes, according to its preferred embodiments, with particular reference to the figures of the accompanying drawings, in which:

- Figure 1 shows an ovoid of Rankine-Fuhrmann, with its construction lines and the indication of its characteristic measures,
- Figure 2 shows a section view of the basic form of the rotating blade body for turbines using the Magnus effect according to a first embodiment of the present invention, and its construction lines,
- Figure 3 shows a perspective view of the basic form of the rotating blade body of figure 1,
- Figure 4 shows a side view of a rotating blade body for turbines using the Magnus effect in accordance with the basic form of the rotating blade body of figure 1,
- Figure 5 shows a front view of the rotating blade body of Figure 4,
- Figure 6 shows a first perspective view of the rotating blade body of Figure 4,
- Figure 7 shows a second perspective view of the rotating blade body of Figure 4, and
- Figure 8 shows a perspective view of a portion of the rotor of a turbine using Magnus effect with axis of rotation of the turbine parallel to the direction of the motor fluid realized using rotating blade bodies according to a second embodiment of the present invention.

It is known that the kinetic energy per unit of time of a generic flow tube can be transformed into mechanical work, and this, in turn, into electrical energy.

It is also known that for fast three-blade wind motors, the transformation ratio stood at close to 38%.

The theory and experiment in recent years (Badr, H.M., Coutanceau, M., Dennis, S.C.R. and Ménard, C., "Unsteady flow past a rotating circular cylinder at Reynolds numbers 103 and 104", J.Fluid Mech. (1990), vol. 220, 459-484.; M.H. Chou, "Numerical study of vortex shedding from a rotating cylinder immersed in a uniform flow field" Int. J. Numer. Meth. Fluids (2000), vol. 32, 545-567; Y.T. Chew, M. Cheng, S.C. Luo: "A numerical study of flow past a rotating circular cylinder using a hybrid vortex scheme" J.Fluid Mech. (1995), vol.299, pp.35-71; W. M. Swonson "The Magnus effect: A summary of investigation to date", Trans. ASME, D, (1961), vol. 83. No.3,P. 461-470; N.M. Bychkov "Magnus Wind Turbine. 2. Characteristics of rotating cylinder" Thermophysics and Aeromechanics,vol. 12, No.1, 2005; N.M. Bychkov "Magnus wind turbine. 1 Results of model testing" Thermophysics and Aeromechanics, vol. 11, No.4, pgg. 567-580 (2004); L.S. Pan, Y.T. Chew "A general formula for calculating forces on a 2-d arbitrary body in incompressible flow" J. of Fluids and Structures (2002) 16(1), 71-82; Wind tunnel testing to identify the efficiency of Magnus Effect wind and hydraulic turbines (2008, A. Zasso, Politecnico di Milano, Department of Mechanics)) have shown that it is possible to improve the performance of a wind turbine using blade bodies of particular shape and animated by their own spin to take advantage of the dynamic Magnus effect, whose circulatory lift is regulated by the circuitry equation of Kutta-Joukowsky.

The present invention aims at optimizing the implementation of axial-symmetric blade bodies, obtained from surfaces of revolution widely experienced in aeronautical engineering, such as the envelope surfaces of airships, and is based in particular on the results of the studies of Todeschini (1949), and more recent researches (Wind tunnel testing to identify the efficiency of Magnus effect wind and hydraulic turbines (2008, A. Zasso, Politecnico di Milano, Department of Mechanical Engineering), ie in particular on experiments relating to the lift, the force normal to the direction of motion, as well as the resistance or "drag", longitudinal and transverse, due to the presence of viscous friction of the medium and the effects of the pressure field on the surface of the body, and finally to the ratio of these two forces, called fluid dynamic efficiency "E".

With regard to the drag, on the reduction of which the present invention is focused, it is possible to distinguish three contributions:

- skin-friction drag, linked to the viscosity of the fluid;
- induced drag, linked to the wingtip vortices;
- form drag or pressure drag, which depends greatly on the shape of the body, the present invention focusing on this last aspect.

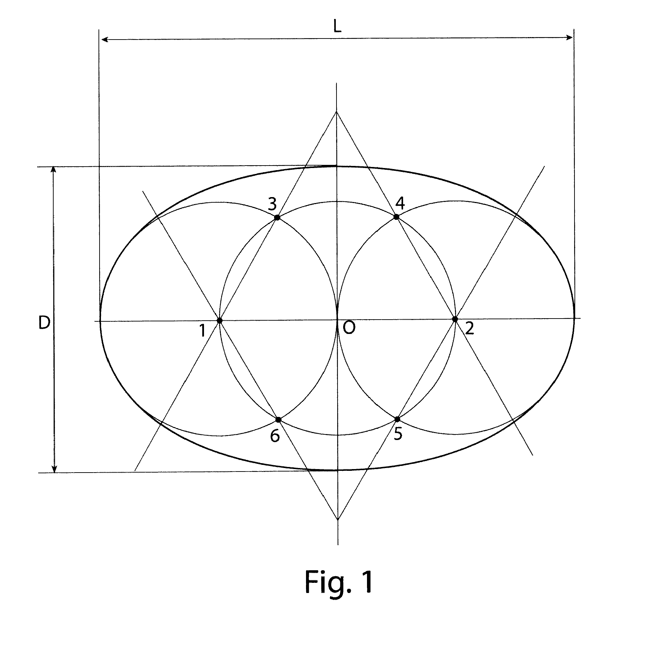

In short, according to the present invention, it is proposed the construction of a blade body that, in order to give good results of power is referred, making the relative improvements, to solutions tested and validated with regards to the coefficients of high lift and contained drag, and at the same time to specific aerodynamic and geometric references, accurate and easily reproducible. These requirements have been identified, according to the present invention, in the solid ovoid of Rankine-Fuhrmann, shown with reference to Figure 1, characterized by a ratio between the major axis L and the minor axis D preferably equal or near 10. This geometric condition involves the development of a complex computational problem, which was solved by iteration in the light of some boundary conditions.

In the solution presented the relationships between the geometrical dimensions of the solid ovoid of Rankine-Fuhrmann depend only on the ratio between the intensity q of the source and the speed V of the uniform stream that invests the source, as will be explained in the following description.

The solid of rotation derived from the oval of Rankine-Fuhrmann has been widely used in the aircraft industry, in the construction of large airships, because its shape has a high coefficient of penetration along the longitudinal axis, and a reduced drag coefficient in the transverse direction.

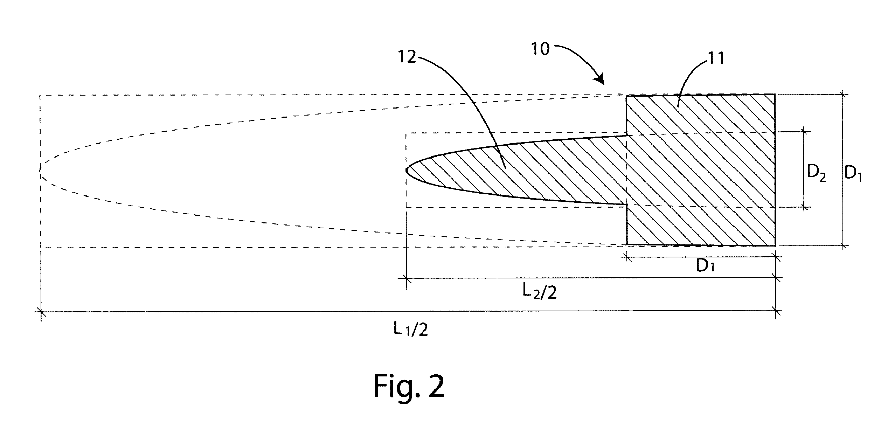

In the present invention, it is also proposed another important datum, that is the ratio between the turbine diameter 0 and the maximum diameter D at the end of the blade body, the length $L_p$ of which is equal to Ø/2. Referring to Figure 2, this ratio, referred to as optimal aspect ratio, between the diameter of the turbine 0 and the maximum width D of the end of the blade body, referring to consolidated tests on the field respectively of the Flettner roto-ship, the oceanographic ship of Cousteau and the Enercon ship, is made to vary between 5 and 6.

The energy yield of a turbine using the Magnus effect according to the present invention can be further improved by making reference in addition to physical-mathematical studies on aerodynamic forces, pressures and velocities acting on the surface of the blade body, as well as to specific technological expedients designed to reduce the energy expense of the movement of each blade body, independently from the others. In particular, the application of these additional design variables allows to guarantee energy yields superior to those obtained by the most modern hydraulic turbines, even in the presence of modest hydrostatic loads, with the contribution of the circuitry of Kutta-Joukowsky, similar to a greater motor hydraulic drop, and of velocity fields of the fluid stream, which, according to the Magnus effect, transform into pressure fields.

According to the present invention, the reference to the theorem of Kutta-Joukowsky is necessary, because because of this it is possible to connect the bearing force acting on a body hit by a fluid stream to the circuitry of the speed along a line that surrounds the body. In short, if the circuitry is null the lift is null, while if the circuitry is different from 0, then the lift is different from 0.

According to the present invention, furthermore, the optimal values of all the parameters will be defined that most affect the performance of turbines using the Magnus effect, which are:

- aspect ratio L/D of ovoids of Rankine-Fuhrmann in which the different sectors of the blade bodies are inscribed, as will be explained in the following;
- speed of rotation (spin) of the blade bodies around their own longitudinal axis;
- number n of blade bodies;
- size z of the hub on which the blade bodies are placed;
- load G of the generator connected to the turbine.

All these quantities will be present in the relative energy balances, represented by equations that describe the process of production of power and calculates the passive power engaged in the rotary movement (spin) of the blade bodies.

Furthermore, in energy balances reference will always be made to the rotation of the blade bodies, and to the derived dynamic coefficients. In these relations, which are valid for axial or radial turbines using the Magnus effect, both if they work in open loops (drive due to wind or flowing water), and if they operate in closed cycles, appear: the aspect coefficient $\psi$, the ratio between the diameter of the turbine and the diameter of the blade body, the kinematic coefficient $\lambda$, the ratio between the peripheral speed of the turbine wheel and the velocity of the undisturbed fluid interacting (also called asymptotic speed); the fluid dynamic coefficient $\alpha$, which expresses the ratio between the tangential spin velocity of the blade body and the velocity of the undisturbed fluid interacting, and the aerodynamic coefficient of fluid dynamic efficiency E (ratio between the lift coefficient $c_L$ and the drag coefficient $c_D$).

Preliminarily, to these parameters values can be attributed derived from calculation and experimentation, suggested by the specific scientific literature, since their numerical value is due to phenomena of instability and vortex separation (which assumes a behavior of random type). In a second phase, it will be possible to compare the prototype results with those obtained by calculation programs of the CFD type (Computational Fluid Dynamics) and it will be possible to identify, by means of subsequent iterations, the most suitable values of viscosity and temperature (thermodynamic parameters), and of kinematic parameters that ruling the operating mode of turbines.

In the following description, the concepts so far anticipated will be treated in detail.

As already mentioned, at the base of the present invention is the choice of a profile of the blade body shaped on the symmetrical profile of the ovoid of Rankine-Fuhrmann with aspect ratio L/D preferably equal to or close to 10, which in the recent past has been widely used in the construction of airships, as it ensures a low drag coefficient both both the front section that sees the line of flight, and for the cross section while offering a greater area to the lines of side streams.

It is put beforehand that, from the physical point of view, the mechanism which establishes the circulating component of the fluid stream around a profile and gives rise to Magnus effect is due to the action of the viscous force at the limit layer of a real fluid, during the starting phases of motion. Subsequently, once the circulatory movement was created, the stationary motion of the fluid which generates the lift can be studied by means of the description of the incompressible and irrotational streams.

To describe the present invention reference is made to the physical-mathematical modes with which the forms of the bodies are modeled which interact with a fast flowing stream.

The fundamental principle of study used to simulate the dynamic reality of the aerodynamic behavior of a body is the one in which sources and wells interact with a fluid stream animated with uniform motion with asymptotic velocity V∞.

The sources are represented as physical-mathematical point entity, from which a flow springs that spreads in the area crossed by the stream of fluid with uniform motion, while the wells (sinks) are summarized as mathematical-physical point entities where a flow disappears.

In the case in which the stream having uniform velocity V∞ invests only a source of given intensity, it opens upstream of the source, and between the new trajectories of the stream lines the stream line is shown which, starting from a point of stagnation positioned upstream of the source, on an axis z parallel to the stream direction and passing through the source, it is arranged in such a way as to draw an open profile named "semi-infinite ogive of Rankine".

If the fluid stream with asymptotic velocity V∞ first meets a source of assigned intensity and subsequently a sink of equal and opposite intensity, the source and the sink being lined on the z axis, the stream lines open and then close, ie it is possible to obtain two singular points, called points of stagnation, the first upstream of the source and the second downstream of the sink, and a stream line flowing through both and that before and after these points of stagnation coincides with the z axis.

The closed surface, which is obtained by rotating this stream line through 360° about the z axis defines the shape of a three-dimensional axial symmetric body of predetermined length which, located in the considered stream, reproduces exactly the field of motion outside said stream line. That means that the profile of this body, formed by the revolution of the line of stream generated by the presence of the source and of the sink, if entered into the stream flow, does not alter the flow pattern changed by the flow of the source and the sink. A body with this form is called "solid of Rankine" or "ovoid of Rankine."

If the sink is distributed in an infinite sequence of sinks, called "sheet of sinks," such as to absorb point by point the same flow distributed by an infinite number of sources, called "sheet of sources", the body drawn within this combination "sheet of sources" - "sheet of sinks", invested by a plain stream of asymptotic velocity $V\infty$, has a symmetrical profile which is a stream line passing through the points of stagnation. This profile is called "symmetric profile of Rankine-Fuhrmann."

The general equation of that profile, given its difficulty, is solved by iteration speculating each time a value of the flow rate per unit length distributed by the "sheet of sources" and absorbed by the "sheet of sinks", capable of satisfying the integral equation of the profile. This method was developed by Rankine and then applied in a systematic way by Fuhrmann, who determined the forms corresponding to different distributions. The so-called penetrating solids of Fuhrmann were also identified, and this denomination is due to the low drag coefficient that characterizes these solids, because their profiles accompain the stream gradually and consequently have a very contained trail, unlike a bluff body, such as a cylinder, which presents a very large trail, characterized by the presence of vortices which are detached and subtract energy to penetration of the body in the fluid.

To further improve the lift capacity of the blade body according to the present invention, it is also possible to corrugate its lateral surface, by covering it with small footprints (dimples), such as for the golf ball, with the aim of making the boundary layer turbulent and therefore to reduce the drag.

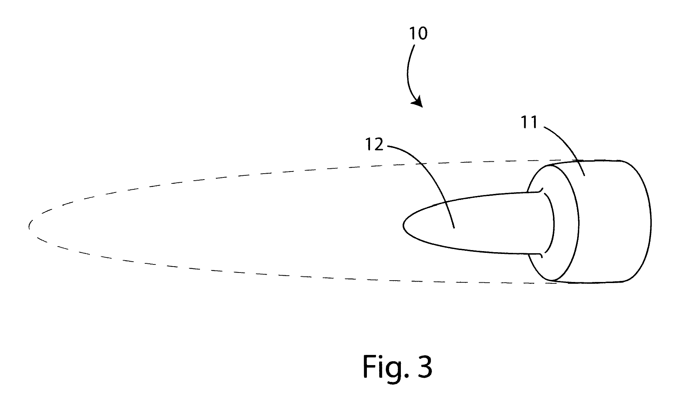

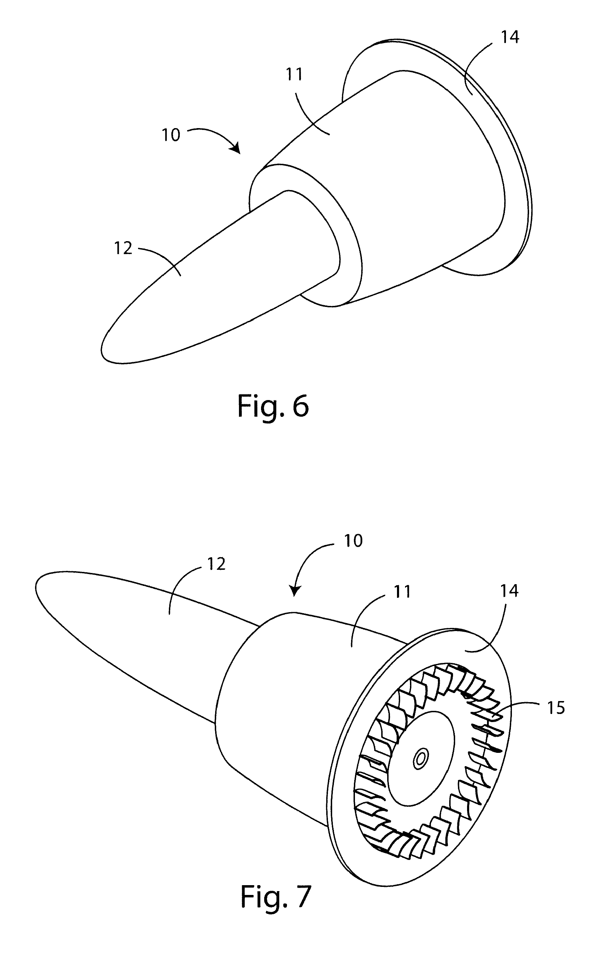

All the foregoing constitutes the theoretical basis underlying the realization of the rotating blade bodies for turbines using the Magnus effect with axis of rotation of the turbine parallel to the direction of the motor fluid according to the present invention, which will be described in more detail in the following description, with particular reference to a first embodiment, shown in Figures 2-7, Figure 8 showing a turbine using Magnus effect with an axis of rotation parallel to the direction of the motor fluid on which are applied the rotating blade bodies according to a second embodiment of the present invention.

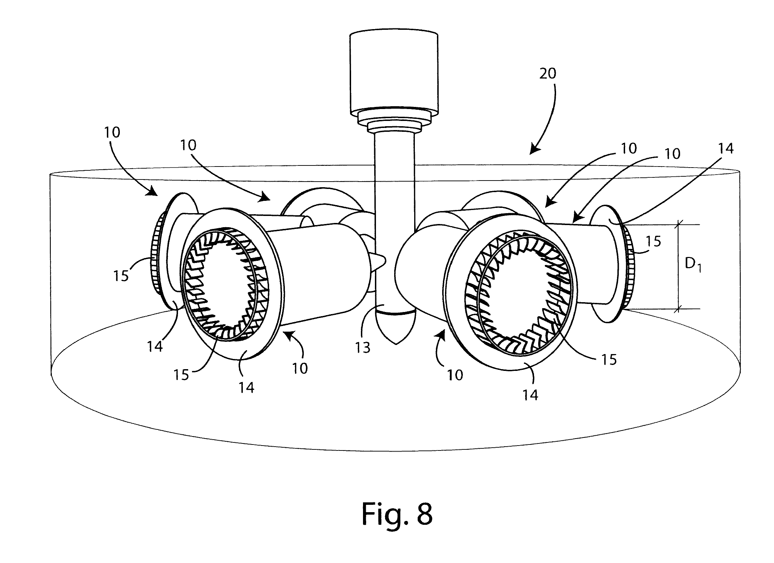

In particular, a blade body with ovoidal profile according to a first embodiment of the present invention, shown in Figures 2 - 7, or according to a second embodiment of the present invention, shown in Figure 8, is in both cases indicated with the reference number 10, and consists of two sectors: a first sector 11, positioned at the exterior of the blade body 10, ie in the portion more distant from the hub 13 which, in a turbine 20 using the Magnus effect, supports said blade body 10, and a second sector 12, positioned between said first sector 11 and said hub 13, with function of connection between said two elements.

The realization of said blade body 10 is developed in accordance with the succession of three steps which are interconnected:

- the first, starting from the processing of project data: fluid flow rate (expressed in $m^3/s$) and height (expressed in m), concerns the calculation of the turbine wheel diameter $\emptyset$;
- the second, finalized to the realization of said first sector 11 of the blade body 10, with reference to the theoretical-experimental results, is related to the choice of the aspect ratio, $\emptyset/D_1$, between the diameter $\emptyset$ of the turbine wheel and the maximum diameter $D_1$ of the ovoidal blade body, and is used for the drawing of the solid of Rankine-Fuhrmann, with minor axis set equal to $D_1$, which circumscribes said first sector 11 of the blade body 10, ie that is used, even if only partially, in the construction of said first sector 11 (Fig. 2-3);
- the third, is connected to the geometric ratios selected for the internal ovoid of Rankine-Fuhrmann, used for the construction of said second sector 12, for connection between said first sector 11 and the hub 13 (Fig. 2).

More precisely, after fixing, as a matter of design, the turbine wheel diameter $\emptyset$, the blade body is developed over two ovoidal profiles of construction of Rankine-Fuhrmann: the first, large and external, with the ratio of major axis $L_1$ and minor axis $D_1$ equal to 10; the second, small and internal, with a ratio between major axis $L_1$ and minor axis $D_1$ still equal to 10 (Fig. 2), with the differences highlighted below.

Referring to Figure 2, the minor axis $D_1$ of the profile of the first sector 11 of the blade body 10 is obtained by fluid-dynamic considerations indicating that the aspect ratio $\emptyset/D_1$ equal to 5 to 6. This aspect ratio has been already widely tested as optimal ratio between the height of the cylindrical roto-sails and their diameters: in Flettner's roto-ship; in Cousteau's ocean-going vessel Alcyone, and in Enercon's cargo ship.

Then, fixed:

$$\emptyset/D_1 = 5;$$

from which:

$$D_1 = \emptyset/5$$

it is possible to draw the external ovoid of construction of Rankine-Fuhrmann, in which the major axis $L_1$ is equal to $10 \cdot D_1$, from which it is obtained the equation:

$$L_1 = 10 \cdot D_1 = 10 \cdot \emptyset/5 = 2\emptyset$$

It is therefore possible to draw the first ovoid of construction, that is the bigger ovoid that circumscribes the first sector 11 of the blade body 10, ie the sector at the end of the blade body 10, said ovoid of construction having a minor axis $D_1 = \emptyset/5$ and major axis $L_1 = 2\emptyset$.

According to the first embodiment of the present invention, the first sector 11 of the body 10 of the turbine blade 20 is obtained following the profile of the bigger ovoid, with its portion farthest from the axis of rotation of the turbine which starts from the plane passing through the minor axis $D_1$ and perpendicular to the major axis $L_1$ and which continues along the profile of the ovoid for a length equal to the minor axis $D_1$ (Fig. 2).

In this way it was realized a mixtilinear quadrangol in the most external and most effective portion of the ovoid shape blade body, as the center of thrust of the action of the Magnus effect is further away from the power axis, that is, from the hub 13. So having a bigger arm, may have a higher motor torque.

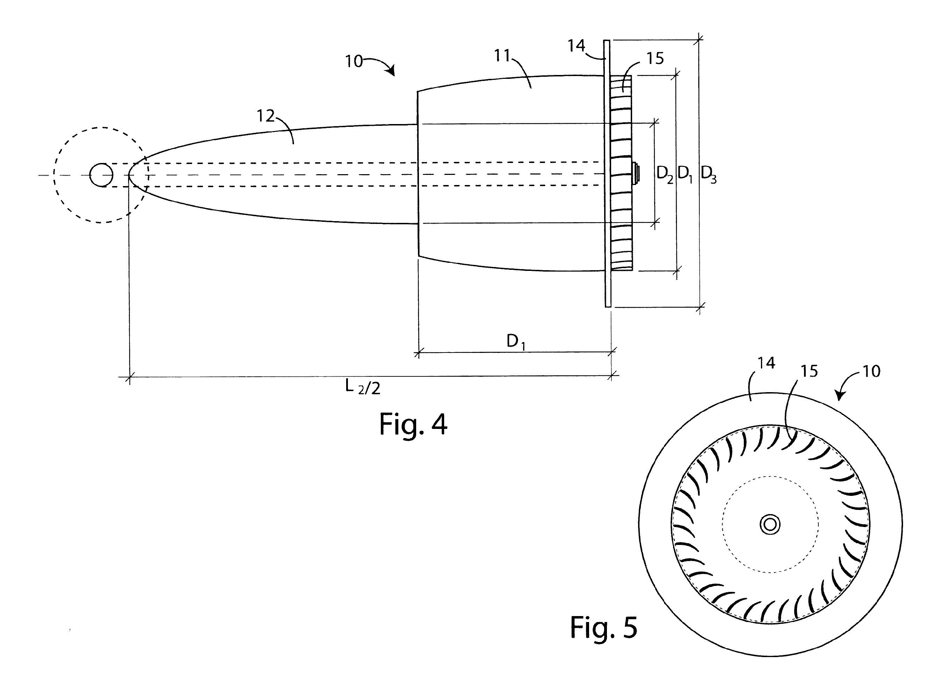

The second sector 12 of the blade body 10, connecting the first sector 11 and the hub 13 can be deduced only from the geometrical ratio $L_2/D_2 = 10$ for the ovoid of Rankine-Fuhrmann, and is drawn on the profile of the smaller ovoid, set $L_2$ equal to $\emptyset$ (or $L_2/2 = \emptyset/2$ and $D_2 = \emptyset/10$) until it reaches the hub 13 (Fig. 2 and Fig. 4).

In order to understand and justify the choices that give rise to the shapes of the rotating blade bodies for turbines using the Magnus effect with axis of rotation of the turbine parallel to the direction of the motor fluid according to the present invention, it should be noted that the effectiveness of the incident flux on the rotating blade bodies is not uniform, but changes along the radial direction starting from the hub 13 and being directed toward the end of the blade body 10.

This variation depends on certain parameters, such as the peripheral speed of the turbine, the angular distance between the adjacent elements belonging to two adjacent blade bodies, and equally distant from the axis of the hub 13, the state of roughness of the surface.

Figure 2 allows to distinguish the two sectors 11, 12 that make up the configuration of the blade body 10 of the turbine 20 using the Magnus effect according to the present invention.

The first sector 11, ie the most peripheral with respect to the hub 13, follows the profile of the greater ovoid deduced from the experimental fluid dynamic considerations previously described.

The second sector 12 follows the profile of the smaller ovoid and acts as a link between the first sector 11 and the axis of power (ie the hub 13).

Referring to Figures 4 - 7, the blade body 10 is completed by an end disk 14, with a diameter $D_3$ greater than $D_1$ and preferably between 1.25 and 1.3 $D_1$, more preferably equal to 1.3 $D_1$, equipped, on its side directed towards the outside by a series of blades 15, shaped so as to capture energy from the flow generating a thrust through which they participates to the movement of the spin of the blade body, thus reducing the energy expense of the engine, incorporated into the blade bodies, dedicated to the rotation of the blade bodies themselves around their axis.

The end plate 14 and the winglets 15 are an adaptation of improvement compared to the previous embodiments of the ends (Flettner rotoship; N.M. Bychkov "Magnus Wind Turbine. 2. Characteristics of rotating cylinder" Thermophysics and Aeromechanics, vol. 12, No.1, 2005). In particular, the end plate has the task to increase the lift of the blade body, reducing the vorticity of the fluid threads of the extremities, and its diameter $D_3$ is equal to $k \cdot D_1$, where k depends on the ratio between the spin velocity of the rotating blade body and the resultant velocity $V_R$ incident on the blade body, vector sum of the undisturbed velocity $V\infty$ of the fluid interacting and the peripheral velocity of the peripheral end of the turbine-wheel: $V_R{}^2 = V\infty^2 + \Omega^2 \cdot R^2$.

In this way it was realised a blade body of excellent solidity, which is comparable to naval propellers, having low values of the aspect ratio $L/D = 5 \div 6$; and low values of spin, on average comprised between 300 and 700 rpm, with peak values of about 2000 rpm for prototypes having diameters equal to three meters.

The clear separation between the two sectors, one that starts from the hub 13, which is the second sector 12 and one at the end, which is the first sector 11, strengthen the task of the end disk 14, causing the rapid decay of secondary vortices degenerating into bulges, when the main vortex is detached and moves downstream, for the increase of the spin (M.H. Chou "Numerical study of vortex shedding from a rotating cylinder immersed in a uniform flow field").

It is important to note two aspects of the decisive stage of movement of the blade bodies.

The first aspect is that the expense of spin is invariant with respect to the speed of the fluid that invests the ovoid blade, as it is apparent from repeated experimental cycles.

The second aspect concerns the fact that, in order to allow continuity in the operation and limitation in energy expense due to the movements, it is convenient to equip each blade body of a motor member of its own rotation around its own axis, at variable speed to cover the working range, despite it involves more difficult construction.

According to an alternative embodiment of the present invention, shown with particular reference to Figure 8, the configuration of the blade body 10 is drawn following the profile of the greater ovoid, starting from the centreline, for a length equal to the longer side of the aureus rectangle having as smaller side the minor axis $D_1$ of the ovoid.

This second embodiment is preferable for turbines with a diameter greater than or equal to 3m.

According to this embodiment, as well as for the previous, the choice of the length of the first sector measured along the axis results in blade bodies characterised by a large surface of impact with the external medium, which involves a slower spin rotation, and therefore a longer useful life and an extractable power higher than other forms of turbines using the Magnus effect.

Also according to this second embodiment of the present invention, as for the previous, the blade body 10 is provided with an end disk 14 with a diameter $D_3$ preferably equal to 1.3 $D_1$, accompanied by a ring of end blades 15, shaped so as to capture energy from the flow and participate, with their thrust, to the motion of the spin, thereby reducing the energy expense of multipole electric motors, embedded in blade bodies.

Again with reference to Figure 8, the results provided by the previous experimental phases in the field of turbines using Magnus effect provide indications on six-bladed turbines, in which the number of blade bodies ensures greater continuity of thrust during the startup and of power as a function of the request of electric load; without, however, the fluid vein being broken or refused when crossing the area of the actuator disk of the turbine, even when the blade bodies have reached the maximum idle speed around the central hub.

The present invention has been described for illustrative but non limitative purposes, according to its preferred embodiments, but it is to be understood that variations and/or modifications can be apport by those skilled in the art without departing from the relevant scope of protection, as defined by the appended claims.

**Claims**

1. Rotating blade body (10) for turbines using the Magnus effect (20) with an axis of rotation of the turbine parallel to the direction of the motor fluid, **characterised in that** it is defined by a first sector (11), more distant from said axis of rotation of the turbine, and by a second sector (12), connecting said first sector (11) and said axis of rotation of the turbine, said first sector (11) being circumscribed within a first ovoid of construction of Rankine-Fuhrman, with minor axis ($D_1$) comprised between 1/5 and 1/6 of the diameter (Ø) of the turbine axis and with major axis ($L_1$) equal to 10 times said minor axis ($D_1$), said first sector (11) having a larger diameter at its point farthest from said axis of rotation of the turbine and equal to $D_1$ and length at least equal to said larger diameter; said second sector (12), of connection between said first sector (11) and said axis of rotation of the turbine, being circumscribed within a second ovoid of construction of Rankine-Fuhrmann, with a major axis ($L_2$) corresponding to the diameter (Ø) of the turbine and with minor axis ($D_2$) equal to 1/10 of said major axis ($L_2$), said second sector (12) having a larger diameter at its point farthest from said axis of rotation of the turbine and a length equal to the distance between said first sector ($D_1$) and said axis of rotation of the turbine.

2. Rotating blade body (10) according to claim 1, **characterised in that** at the peripheral end of said first sector (11) an end disk (14) is present, having a diameter ($D_3$) greater than said larger diameter of said first sector (11).

3. Rotating blade body (10) according to claim 2, **characterised in that** said end disk has a diameter ($D_3$) between 1.2 and 1.3 times said larger diameter of said first sector (11) and preferably equal to 1.3 times said larger diameter of said first sector (11).

4. Rotating blade body (10) according to any one of the preceding claims, **characterised in that** it comprises at its end farthest from said axis of rotation of the turbine a series of blades (15) shaped so as to generate a thrust which contribute to the rotation of said blade body (10) around its own axis.

5. Rotating blade body (10) according to any one of claims 1 - 4, **characterised in that** said first sector (11) has a length equal to said larger diameter.

6. Rotating blade body (10) according to any one of claims 1 - 4, **characterized in that** said first sector (11) has a length equal to the greater side of the aureus rectangle having as minor side said greater diameter of said first sector (11).

7. Rotating blade body (10) according to any one of the preceding claims, **characterized in that** the lateral surface of said first sector (11) and/or the lateral surface of said second sector (12) presents a series of dimples.

8. Turbine using Magnus effect (20) with an axis of rotation parallel to the direction of the motor fluid, **characterised in that** it comprises a plurality of rotating blade bodies (10) as defined in claims 1 - 7.

9. Turbine using Magnus effect according to claim 8, **characterised in that** said rotating blade bodies (10) are in a number of 6.

Fig. 1

Fig. 2

EP 2 713 045 A1

Fig. 3

Fig. 4

Fig. 5

EP 2 713 045 A1

Fig. 6

Fig. 7

Fig. 8

Europäisches
Patentamt

European
Patent Office

Office européen
des brevets

# EUROPEAN SEARCH REPORT

Application Number

EP 12 42 5157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2008 082185 A (KANSAI ELECTRIC POWER CO) 10 April 2008 (2008-04-10)<br>* abstract; figures 5,6 *<br>----- | 1,8 | INV.<br>F03D1/06 |
| A | EP 1 764 503 A2 (MARRERO O'SHANAHAN PEDRO M [ES]) 21 March 2007 (2007-03-21)<br>* paragraphs [0012], [0013]; figures *<br>----- | 1,8 | |
| | | | TECHNICAL FIELDS SEARCHED (IPC) |
| | | | F03D |

The present search report has been drawn up for all claims

| Place of search | Date of completion of the search | Examiner |
|---|---|---|
| The Hague | 14 February 2013 | Areal Calama, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 42 5157

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2013

| Patent document cited in search report | | Publication date | Patent family member(s) | | Publication date |
|---|---|---|---|---|---|
| JP 2008082185 | A | 10-04-2008 | NONE | | |
| EP 1764503 | A2 | 21-03-2007 | EP | 1764503 A2 | 21-03-2007 |
| | | | ES | 2274708 A1 | 16-05-2007 |

EPO FORM P0459

**EP 2 713 045 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 1674169 A
- US 4366386 A, TF Hanson
- EP 886728 A
- WO 2002042640 A

### Non-patent literature cited in the description

- **A. FLETTNER.** *Mein Weg zum Rotor,* 1926
- La Teoria delle Apparenze. Istituto Italiano d'Arti Grafiche, 1949
- Psico-Biofisica. 1949
- **BADR, H.M. ; COUTANCEAU, M. ; DENNIS, S.C.R. ; MÉNARD, C.** Unsteady flow past a rotating circular cylinder at Reynolds numbers 103 and 10. *J.Fluid Mech.,* 1990, vol. 220, 459-484
- **M.H. CHOU.** Numerical study of vortex shedding from a rotating cylinder immersed in a uniform flow field. *Int. J. Numer. Meth. Fluids,* 2000, vol. 32, 545-567
- **Y.T. CHEW ; M. CHENG ; S.C. LUO.** A numerical study of flow past a rotating circular cylinder using a hybrid vortex scheme. *J.Fluid Mech.,* 1995, vol. 299, 35-71
- **W. M. SWONSON.** The Magnus effect: A summary of investigation to date. *Trans. ASME, D,* 1961, vol. 83 (3), 461-470
- **N.M. BYCHKOV.** Magnus Wind Turbine. 2. Characteristics of rotating cylinder. *Thermophysics and Aeromechanics,* 2005, vol. 12 (1
- **N.M. BYCHKOV.** Magnus wind turbine. 1 Results of model testing. *Thermophysics and Aeromechanics,* 2004, vol. 11 (4), 567-580
- **L.S. PAN ; Y.T. CHEW.** A general formula for calculating forces on a 2-d arbitrary body in incompressible flow. *J. of Fluids and Structures,* 2002, vol. 16 (1), 71-82
- **A. ZASSO.** Wind tunnel testing to identify the efficiency of Magnus Effect wind and hydraulic turbines. *Politecnico di Milano,* 2008